# EUROPÄISCHE PATENTSCHRIFT

(11) **EP 1 839 959 B1**
(45) Veröffentlichungstag und Bekanntmachung des Hinweises auf die Patenterteilung: **19.12.2012**
(21) Anmeldenummer: 07000649.9
(22) Anmeldetag: 13.01.2007
(51) Int. Cl.: B60R 19/24, B62D 21/15

(54) **Aufnehmerelement zum Lagern eines Pralldämpfers**
Pick-up element for mounting a rebound stop
Elément récepteur destiné à la fixation d'un amortisseur de choc

(30) Priorität: 31.03.2006 DE 102006014982
(43) Veröffentlichungstag der Anmeldung: 03.10.2007
(73) Patentinhaber: Dr. Ing. h.c. F. Porsche AG, 70435 Stuttgart (DE)
(72) Erfinder: Schiebel, Dieter, 70825 Korntal-Münchigen (DE); Lippold, Andrea, 70499 Stuttgart (DE)

(56) Entgegenhaltungen:
- EP-B- 0 830 988
- DE-A1- 2 222 557
- DE-A1- 4 009 401
- DE-A1- 10 301 913
- DE-A1- 19 924 641
- US-A1- 2005 067 860

## Beschreibung

Die vorliegende Erfindung bezieht sich auf ein Aufnehmerelement zum Lagern eines Pralldämpfers eines Fahrzeugs.

Obwohl auf beliebige Fahrzeuge und beliebige Pralldämpfer des Fahrzeugs anwendbar, werden die vorliegende Erfindung sowie die ihr zugrundeliegende Problematik in Bezug auf einen Heckbereich eines Personenkraftwagens näher erläutert.

In einem modernen Kraftfahrzeug sind im allgemeinen vordere und hintere Pralldämpfer vorgesehen, welche zwischen den jeweiligen Stoßfängern und den zugeordneten Längsträgern an der Tragstruktur der Fahrzeugkarosserie angebracht sind und einer Aufnahme von Aufprallenergie im Falle eines Auffahrunfalls dienen.

Die Druckschrift EP 0 830 988 B1 , gemäß der Oberbegriff des Anspruchs 1, beschreibt ein Aufnehmerelement zur Aufnahme eines zugeordneten Pralldämpfers, welches als Strangpressprofil ausgebildet ist und auf einem zugeordneten Endbereich eines Längsträgers aufgesteckt und mittels eines Schweißverfahrens daran befestigt ist.

An diesem Ansatz gemäß dem Stand der Technik hat sich jedoch die Tatsache als nachteilig herausgestellt, dass die Formfreiheit des Aufnehmerelementes aufgrund des verwendeten Strangpressverfahrens eingeschränkt ist und weitere Verfahrensschritte beispielsweise zum Bilden eines Durchbruchs zum Einstecken des zugeordneten Pralldämpfers notwendig sind.

Aus der Druckschrift DE 40 09 401 A1 ist eine Trägerstruktur im Endbereich einer Fahrzeugkarosserie bekannt, welche ein Knotenelement aufweist, das zwei senkrecht zueinander abgewinkelte Aufsteckbereiche aufweist und somit sowohl auf einem Endbereich eines zugeordneten Längsträgers als auch auf einem Endbereich eines zugeordneten Querträgers aufsteckbar und mit diesen verbindbar ist.

An diesem Ansatz gemäß dem Stand der Technik hat sich jedoch die Tatsache als nachteilig herausgestellt, dass aufgrund des Aufsteckens des Knotenelementes sowohl auf dem Endbereich des Längsträgers als auch auf dem Endbereich des Querträgers eine hohe Passgenauigkeit erforderlich ist. Dadurch sind derartige Knotenelemente lediglich mit einem aufwändigen und kostenintensiven Herstellungsverfahren herstellbar. Des Weiteren können derartige Teile mit zueinander senkrecht ausgebildeten Aufsteckbereichen nicht in einer einheitlichen Entformrichtung entnommen werden, so dass eine kostenintensive und umständliche Entnahme erforderlich ist.

Der vorliegenden Erfindung liegt die Aufgabe zugrunde, ein Aufnehmerelement zum Lagern eines Pralldämpfers zu schaffen, welches die oben genannten Nachteile beseitigt und welches insbesondere mittels eines einfachen und kostengünstigen Herstellungsverfahrens herstellbar ist.

### VORTEILE DER ERFINDUNG

Diese Aufgabe wird erfindungsgemäß durch das Aufnehmerelement mit den Merkmalen des Patentanspruchs 1 gelöst.

Die der vorliegenden Erfindung zugrunde liegende Idee besteht darin, dass das Aufnehmerelement zum Lagern eines Pralldämpfers einen Grundkörper, welcher einen Verbindungsabschnitt für eine feste Verbindung mit einem Endbereich eines zugeordneten Längsträgers und einen Aufnahmebereich zur Aufnahme eines zugeordneten Lagerabschnitts des Pralldämpfers umfasst, und mindestens einen Flanschabschnitt aufweist, welcher an dem Grundkörper angeformt und mit einem Endbereich eines zugeordneten Querträgers fest verbindbar ist.

Mit einer derartigen Ausgestaltung kann das Aufnehmerelement mittels eines vorteilhaften Herstellungsverfahrens als Gussteil hergestellt werden. Da das Aufnehmerelement lediglich einen Aufsteckbereich für ein Aufstecken auf einem Endbereich des zugeordneten Längsträgers aufweist, kann das erfindungsgemäße Aufnehmerelement in einer einheitlichen Entformrichtung aus der Gießform entnommen werden. Dies stellt ein einfaches und kostengünstiges Herstellungsverfahren zur Herstellung des Aufnehmerelementes als Gussteil dar.

Ferner besitzt das Aufnehmerelement eine Doppelfunktion, da es einerseits einer Lagerung des zugeordneten Pralldämpfers und andererseits als Knotenelement für eine Verbindung der Endbereiche des Längsträgers und des Querträgers miteinander dient. Durch den angeordneten Flanschabschnitt wird eine verbesserte Toleranz für eine Verbindung des Querträgers und des Längsträgers geschaffen, wodurch die Herstellungskosten verringert werden können.

In den Unteransprüchen finden sich vorteilhafte Ausgestaltungen und Verbesserungen des im Patentanspruch 1 angegebenen Aufnehmerelementes.

Gemäß einer bevorzugten Weiterbildung ist das Aufnehmerelement als Gussteil ausgebildet und wird über einen seitlich abkragenden Flansch, welcher sich über dem hinteren Querträger erstreckt, mit dem Querträger verschweißt. Der Knotenpunkt zwischen dem hinteren Querträger und dem zugeordneten hinteren Längsträger kann entweder durch das Aufnehmerelement alleine oder in Verbindung mit einem ebenfalls als Knotenelement dienenden Motorlager bewerkstelligt werden.

### ZEICHNUNGEN

Die Erfindung wird im Folgenden anhand von Ausführungsbeispielen unter Bezugnahme auf die beiliegenden Figuren der Zeichnung näher erläutert.

Von den Figuren zeigen:
- Figur 1: eine perspektivische Ansicht eines Aufnehmerelementes gemäß einem bevorzugten Ausführungsbeispiel der vorliegenden Erfindung;
- Figur 2: eine Vorderansicht des Aufnehmerelementes aus Figur 1;
- Figur 3: eine Draufsicht auf das Aufnehmerelement aus den Figuren 1 und 2;
- Figur 4: eine Rückansicht des Aufnehmerelementes aus den Figuren 1 bis 3;
- Figur 5: eine perspektivische Ansicht eines auf einem Endbereich eines zugeordneten Längsträgers montierten, linksseitigen Aufnehmerelementes gemäß einem bevorzugten Ausführungsbeispiel der vorliegenden Erfindung; und
- Figur 6: eine perspektivische Ansicht eines linksseitigen Aufnehmerelementes, welches sowohl mit dem Endbereich eines zugeordneten Längsträgers als auch mit dem Endbereich eines zugeordneten Querträgers verbunden ist.

### BESCHREIBUNG BEVORZUGTER AUSFÜHRUNGSBEISPIELE

In den Figuren der Zeichnung bezeichnen dieselben Bezugszeichen gleiche oder funktionsgleiche Komponenten, soweit nichts Gegenteiliges angegeben ist.

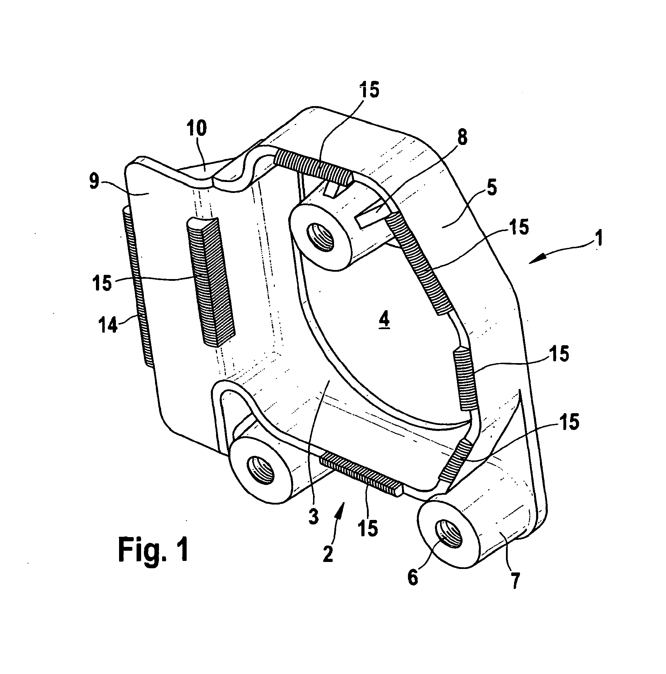

Im Folgenden wird unter Bezugnahme auf die Figuren 1 bis 4 ein Aufnehmerelement gemäß einem bevorzugten Ausführungsbeispiel der vorliegenden Erfindung näher erläutert. Rein exemplarisch wird ein Aufnehmerelement 1 beschrieben, welches im heckseitigen Eckbereich zwischen dem in Fahrtrichtung gesehen linken, hinteren Längsträger und dem hinteren Querträger vorgesehen ist. Die folgenden Ausführungen sind selbstverständlich analog auf den heckseitigen Eckbereich zwischen dem in Fahrtrichtung gesehenen rechten, hinteren Längsträger und dem hinteren Querträger bzw. auf die vorderen Eckbereiche des Fahrzeugs anwendbar.

Das Aufnehmerelement 1 ist als Gussteil aus einer geeigneten Aluminiumlegierung oder einer anderen Leichtmetalllegierung ausgebildet. Dadurch ist ein stabiles und leichtes Aufnehmerelement 1 gewährleistet. Aufgrund der nachfolgend beschriebenen Ausgestaltung ist das Aufnehmerelement 1 vorteilhaft in einer Entformrichtung der Gussform entnehmbar und mittels eines einfachen und kostengünstigen Herstellungsverfahrens herstellbar.

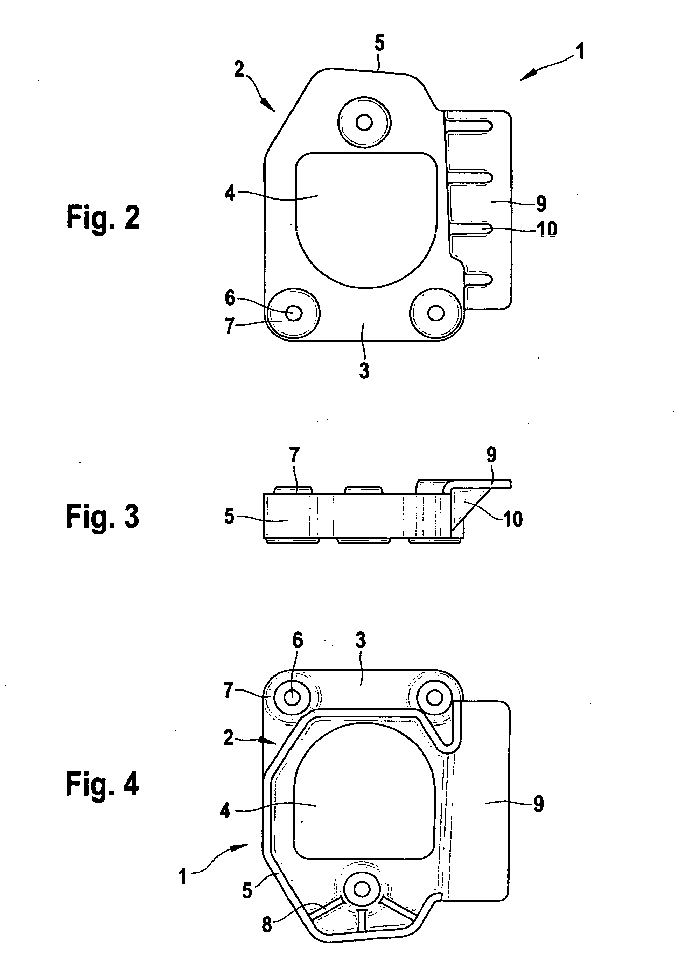

Wie in den Figuren 1 bis 4 ersichtlich ist, weist das Aufnehmerelement 1 gemäß dem vorliegenden Ausführungsbeispiel einen Grundkörper 2 in Form eines mehrkantigen Deckels auf. Der Grundkörper 2 umfasst eine ebene Grundfläche 3, in welcher eine Aufnahmeöffnung 4 zur Aufnahme eines zugeordneten Lagerabschnitts eines aufzunehmenden Pralldämpfers vorgesehen ist. Die Aufnahmeöffnung 4 ist vorzugsweise komplementär zu der geometrischen Abmessung des zugeordneten Lagerabschnitts des aufzunehmenden Pralldämpfers für eine bündige Aufnahme desselben ausgestattet, beispielsweise mit der in Figur 2 dargestellten Form.

Im Randbereich der Grundfläche 3 ist ein in etwa senkrecht zur Grundfläche 3 und in Richtung des zugeordneten Längsträgers abgewinkelter Randabschnitt 5 angeformt, welcher vorzugsweise im aufgesteckten Zustand des Aufnehmerelementes 1 auf dem zugeordneten Endbereich des Längsträgers den Außenumfang des Längsträgers vollumfänglich umschließt und sich an diesem abstützt. Der Randabschnitt 5 ist vorzugsweise komplementär zu dem Querschnittsprofil des zugeordneten Endbereiches des Längsträgers ausgebildet, um ein bündiges Aufstecken des Aufnehmerelementes 1 auf dem Längsträger zu ermöglichen.

Des Weiteren sind im Bereich der Grundfläche 3 mehrere, gemäß dem vorliegenden Ausführungsbeispiel drei Befestigungslöcher 6 vorgesehen, welche vorzugsweise als Gewindebohrungen ausgebildet sind und einer Aufnahme von Befestigungsmitteln für eine Befestigung des zugeordneten Pralldämpfers an dem Aufnehmerelement 1 dienen. Die Befestigungslöcher 6 werden beispielsweise durch zylinderförmige oder konisch zulaufende und axial in Richtung des zugeordneten Längsträgers weisende Anformungen 7 gebildet, so dass das Aufnehmerelement 1 mit einer geringen Wandstärke und somit mit einem geringen Gewicht ausgebildet werden kann. Für eine Versteifung der Anformungen 7 können diese mit Verstärkungsrippen 8 ausgebildet sein. Es sind beispielsweise zwei untere, seitlich voneinander beabstandete Anformungen 7 zum Bilden von zwei unteren Befestigungslöcher 6 an der Grundfläche 3 außerhalb des Randabschnitts 5 vorgesehen, wohingegen eine obere Anformung 7 zum Bilden eines oberen Befestigungsloches 6 oberhalb der Aufnahmeöffnung 4 innerhalb des Randabschnitts 5 angeformt ist. Somit sind die obere Anformung 7 im aufgesteckten Zustand des Aufnehmerelementes 1 auf dem zugeordneten Längsträger innerhalb des Hohlprofils des Längsträgers und die beiden unteren Anformungen 7 unterhalb bzw. außerhalb des Längsträgerprofils vorgesehen. Es ist allerdings für einen Fachmann offensichtlich, dass die Anzahl und die Anordnung der einzelnen Anformungen 7 beliebig modifizierbar ist.

Wie insbesondere in den Figuren 1 bis 4 ferner illustriert ist, weist das Aufnehmerelement 1 zudem einen seitlichen Flanschabschnitt 9 auf, welcher als seitlich abkragende, ebene Anlagefläche für eine flächige Anlage an der 0berfläche eines zugeordneten Endbereiches eines Querträgers ausgebildet ist. Der Flanschabschnitt 9 weist vorzugsweise an der dem zugeordneten Querträger abgewandten Seite mehrere Verstärkungsrippen 10 auf, welche vorzugsweise schräg zwischen dem Flanschabschnitt 9 und dem Randabschnitt 5 des Grundkörpers 2 verlaufen, wie insbesondere in der Draufsicht aus Figur 3 ersichtlich ist.

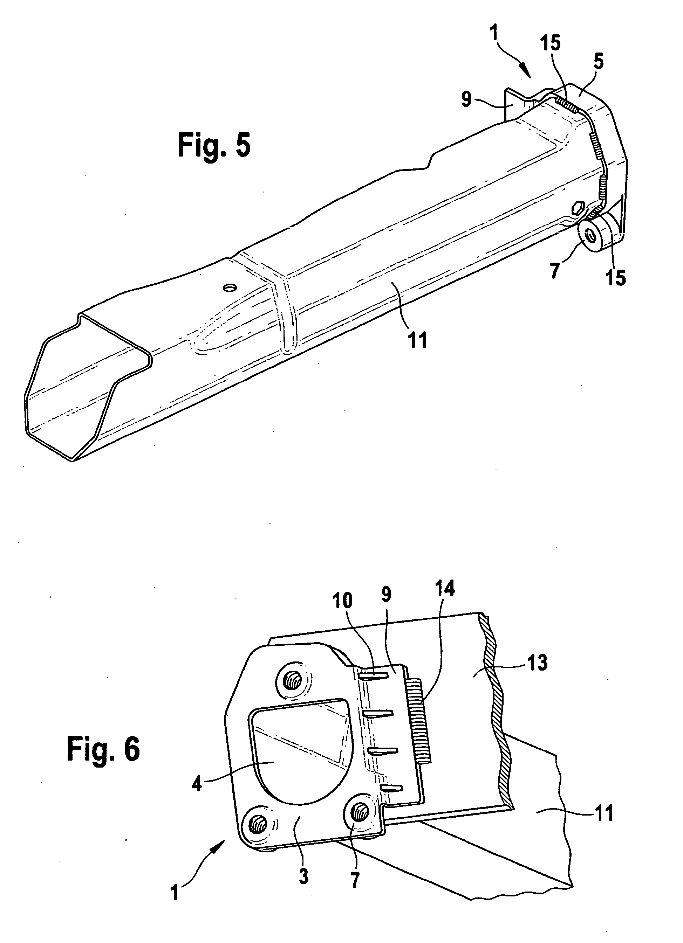

Im montierten Zustand, wie in den Figuren 5 und 6 dargestellt ist, wird das Aufnehmerelement 1 derart auf den Endbereich eines zugeordneten Längsträgers 11 aufgeschoben, dass der Randabschnitt 5 den Außenumfang des Längsträgers 11 vollumfänglich umgibt bzw. umschließt. Das Aufnehmerelement 1 wird anschließend vorzugsweise mittels eines geeigneten Schweißverfahrens an dem zugeordneten Endbereich des Längsträgers 11 fest angebracht, wobei Schweißstellen 15 vorzugsweise zwischen vorbestimmten Bereichen des Randabschnitts 5 und der Oberfläche des Längsträgers 11 vorgesehen werden.

Der Flanschabschnitt 9 des Aufnehmerelementes 1 befindet sich im montierten Zustand in flächiger Anlage mit einer zugeordneten Oberfläche des Endbereiches eines zugeordneten Querträgers 13 und wird ebenfalls vorzugsweise mittels geeigneter Schweißstellen 14 an dem zugeordneten Abschnitt des Querträgers 13 fest angebracht. Ein Lagerabschnitt eines nicht dargestellten Pralldämpfers wird in die Aufnahmeöffnung 4 eingesteckt und über die Befestigungslöcher 6 fest an dem Aufnehmerelement 1 verschraubt.

Somit schafft die vorliegende Erfindung ein Aufnehmerelement, welches mittels eines vorteilhaften Herstellungsverfahrens als Gussteil mit einer einheitlichen Entformrichtung herstellbar ist. Das Aufnehmerelement besitzt eine Doppelfunktion und dient neben der Aufnahme eines zugeordneten Pralldämpfers als Knotenelement für eine Verbindung zwischen den Endbereichen eines zugeordneten Längsträgers und eines zugeordneten Querträgers. Beispielsweise wird durch das erfindungsgemäße Aufnehmerelement in Verbindung mit einem entsprechend ausgebildeten Motorlager, welches ebenfalls als Knotenelement sowohl mit dem Längsträger als auch mit dem Querträger verbunden ist, ein Knotenpunkt zwischen dem hinteren Längsträger und dem hinteren Querträger vervollständigt. Es ist allerdings offensichtlich, dass die Verbindungen in den Endbereichen der jeweiligen Längs- und Querträger auch lediglich durch das oben beschriebene Aufnehmerelement gebildet werden können.

## Patentansprüche

1. Aufnehmerelement (1) zum Lagern eines Pralldämpfers eines Fahrzeugs, mit einem Grundkörper (2), welcher einen Verbindungsabschnitt (5) für eine feste Verbindung mit einem Endbereich eines zugeordneten Längsträgers (11) und einen Aufnahmebereich (Aufnahmeöffnung 4) zur Aufnahme eines zugeordneten Lagerabschnitts des Pralldämpfers aufweist; und mit einem Flanschabschnitt (9), welcher an dem Grundkörper (2) angeformt und mit einem Endbereich eines zugeordneten Querträgers (13) fest verbindbar ist, wobei der Flanschabschnitt (9) eine seitlich in etwa senkrecht abgewinkelte, ebene Anlagefläche für eine flächige Anlage an dem Endbereich des zugeordneten Querträgers (13) aufweist, **dadurch gekennzeichnet, dass** das Aufnehmerelement (1) als eine einheitliche Entformrichtung aufweisendes Gussteil aus einer Leichtmetalliegierung ausgebildet ist, dass der Verbindungsabschnitt als in axialer Richtung des Grundkörpers (2) abgewirkelter, den Endbereich des zugeordneten Längsträgers (11) vollumfänglich umschließender Randabschnitt (5) ausgebildet ist, und dass der Flanschabschnitt (9) mit dem Endbereich des zugeordneten Querträgers (13) mittels eines geeigneten Schweißverfahrens fest verbindbar ist.

2. Aufnehmerelement nach Anspruch 1, **dadurch gekennzeichnet, dass** der Randabschnitt (5) mit dem Endbereich des zugeordneten Längsträgers (11) mittels eines geeigneten Schweißverfahrens fest verbindbar ist.

3. Aufnehmerelement nach Anspruch 1, **dadurch gekennzeichnet, dass** der Flanschabschnitt (9) Verstärkungsrippen (10) aufweist, welche sich an der dem Querträger (13) abgewandten Seite des Flanschabschnitts (9) und an dem Grundkörper (2) abstützen.

4. Aufnehmerelement nach Anspruch 1, **dadurch gekennzeichnet, dass** der Aufnahmebereich als Aufnahmeöffnung (4) zum Einstecken eines zugeordneten Lagerabschnitts des Pralldämpfers ausgebildet ist.

5. Aufnehmerelement nach Anspruch 4, **dadurch gekennzeichnet, dass** der Grundkörper (2) im Umfangsbereich der Aufnahmeöffnung (4) mehrere Befestigungslöcher (6) für eine feste Anbringung eines Befestigungsabschnitts des Pralldämpfers an dem Aufnehmerelement (1) mittels einer Schraubverbindung aufweist.

## Claims

1. Pick-up element (1) for mounting a rebound stop of a vehicle, with a basic body (2) which has a connecting section (5) for a fixed connection to an end region of an associated longitudinal member (11), and a receiving region (receiving opening 4) for receiving an associated bearing section of the rebound stop; and with a flange section (9) which is integrally formed on the basic body (2) and is fixedly connectable to an end region of an associated cross member (13), wherein the flange section (9) has a flat bearing surface which is angled laterally approximately perpendicularly and is intended for bearing in a sheet-like manner against the end region of the associated cross member (13), **characterized in that** the pick-up element (1) is designed as a casting which has a uniform demoulding direction and is composed of a light metal alloy, **in that** the connecting section is designed as an edge section (5) which is angled in the axial direction of the basic body (2) and completely surrounds the end region of the associated longitudinal member (11), and **in that** the flange section (9) is fixedly connectable to the end region of the associated cross member (13) by means of a suitable welding process.

2. Pick-up element according to Claim 1, **characterized in that** the edge section (5) is fixedly connectable to the end region of the associated longitudinal member (11) by means of a suitable welding process.

3. Pick-up element according to Claim 1, **characterized in that** the flange section (9) has reinforcing ribs (10) which are supported on that side of the flange section (9) which faces away from the cross member (13) and on the basic body (2) .

4. Pick-up element according to Claim 1, **characterized in that** the receiving region is designed as a receiving opening (4) for the insertion of an associated bearing section of the rebound stop.

5. Pick-up element according to Claim 4, **characterized in that** the basic body (2) has a plurality of fastening holes (6) in the circumferential region of the receiving opening (4) for fixed attachment of a fastening section of the rebound stop to the pick-up element (1) by means of a screw connection.

## Revendications

1. Élément récepteur (1) destiné au montage d'un amortisseur de choc d'un véhicule, comprenant un corps de base (2) qui comprend une section de liaison (5) pour une liaison solide à une région d'extrémité d'un longeron associé (11) et une région de réception (ouverture de réception 4) pour la réception d'une section de montage associée de l'amortisseur de choc ; et comprenant une section de bride (9) qui est formée sur le corps de base (2) et qui peut être reliée solidement à une région d'extrémité d'une traverse associée (13), la section de bride (9) comprenant une surface d'appui plane coudée latéralement de manière approximativement perpendiculaire pour un appui plan sur la région d'extrémité de la traverse associée (13), **caractérisé en ce que** l'élément récepteur (1) est réalisé sous forme de pièce moulée en un alliage léger présentant une direction de démoulage régulière, **en ce que** la section de liaison est réalisée sous forme de section de bord (5) coudée dans la direction axiale du corps de base (2) et entourant la région d'extrémité du longeron associé (11) sur toute sa périphérie et **en ce que** la section de bride (9) peut être reliée solidement à la région d'extrémité de la traverse associée (13) au moyen d'un procédé de soudage approprié.

2. Élément récepteur selon la revendication 1, **caractérisé en ce que** la section de bord (5) peut être reliée solidement à la région d'extrémité du longeron associé (11) au moyen d'un procédé de soudage approprié.

3. Élément récepteur selon la revendication 1, **caractérisé en ce que** la section de bride (9) comprend des nervures de renforcement (10) qui s'appuient contre le côté de la section de bride (9) qui est opposé à la traverse (13) et contre le corps de base (2).

4. Élément récepteur selon la revendication 1, **caractérisé en ce que** la section de réception est réalisé sous forme d'ouverture de réception (4) pour l'insertion d'une section de montage associée de l'amortisseur de choc.

5. Élément récepteur selon la revendication 4, **caractérisé en ce que** le corps de base (2) comprend, dans la région périphérique de l'ouverture de réception (4), plusieurs trous de fixation (6) pour un montage à demeure d'une section de fixation de l'amortisseur de choc sur l'élément récepteur (1) au moyen d'une liaison par vissage.
